# EUROPÄISCHE PATENTSCHRIFT

(11) **EP 1 292 736 B1**
(45) Veröffentlichungstag und Bekanntmachung des Hinweises auf die Patenterteilung: **27.10.2004**
(21) Anmeldenummer: 01935905.8
(22) Anmeldetag: 08.06.2001
(51) Int. Cl.: E03D 1/32, E03D 9/14

(54) **EINLAUFGARNITUR FÜR EINEN SPÜLKASTEN**
FILLER FITTING FOR A WC CISTERN
GARNITURE D'ARRIVEE D'EAU POUR UN RESERVOIR DE CHASSE

(30) Priorität: 22.06.2000 CH 123600
(43) Veröffentlichungstag der Anmeldung: 19.03.2003
(73) Patentinhaber: GEBERIT TECHNIK AG, 8645 Jona (CH)
(72) Erfinder: HUBATKA, Alex, CH-8735 St. Gallenkappel (CH)
(74) Vertreter: Groner, Manfred
(86) Internationale Anmeldenummer: PCT/CH2001/000359
(87) Internationale Veröffentlichungsnummer: WO 2001/098592

(56) Entgegenhaltungen:
- CH-A- 408 804
- CH-A- 661 080
- FR-A- 2 492 868
- US-A- 3 211 172
- US-A- 4 338 964

## Beschreibung

Die Erfindung betrifft eine Einlaufgarnitur für einen Spülkasten, mit einem Ventilgehäuse, das einen Wasserführungskanal aufweist, der von einem an eine Wasserversorgungsleitung anzuschliessenden Einlass zu einem schwimmergesteuerten Membranventil führt, das in der Membran einen Durchgang für den Druckausgleich zwischen einem Raum vor der Membran und einem Raum nach der Membran aufweist und mit einem nach der Membran angeordneten Ringkanal, in den das Wasser bei offenem Ventil tangential einströmt und in dem das Wasser um die Achse eines Ablaufrohres der Einlaufgarnitur rotiert, wobei der Strömungsquerschnitt nach diesem Ringraum vermindert ist.

Eine Einlaufgarnitur dieser Art ist im Stand der Technik aus der CH-A-661 080 des Anmelders bekannt geworden. Bei dieser strömt bei offenem Ventil das Wasser tangential in einen nach dem Ventilsitz angeordneten Ringkanal des Gehäuses. In diesem Ringkanal rotiert das Wasser um die Achse des Ablaufrohres und strömt in den Innenraum des Ablaufrohres und schliesslich in den Spülkasten. Der Strömungsquerschnitt in Richtung der Achse des Ablaufrohres ist im oberen Bereich des Ablaufrohres verkleinert. Wesentlich ist, dass das Wasser im Ringkanal zur Rotation gezwungen wird und strömt dadurch spiralförmig mit einem Drall im Ablaufrohr nach unten in den Spülkasten. Der spiralförmige Verlauf des Wassers ergibt einen vergleichsweise geräuscharmen Einlauf.

Durch die EP-A-731 230 ist eine Einlaufgarnitur bekannt geworden, die am oberen Ende des Ablaufrohres einen spiralförmigen Durchgang mit mehreren Schraubengängen aufweist. Bei geöffnetem Ventil strömt das Wasser achsial in diesen Durchgang und wird durch den strahlförmigen Verlauf in Rotation versetzt. Das Wasser strömt somit wie bei der oben genannten Einlaufgarnitur spiralförmig im Ablaufrohr nach unten. Der spiralförmige Kanal wird durch einen Kegelstumpf-förmigen Körper sowie einen eben solchen Teil des Gehäuses gebildet. Die Herstellung dieses Gehäuses und des Einsatzes ist vergleichsweise aufwendig.

Aus der WO 00/15991 ist eine Einlaufgarnitur bekannt geworden, bei welcher auf das obere Ende des Ablaufrohres ein Teil aufgesetzt ist, das in einen zylindrischen Teil des Gehäuses eingesetzt ist und ebenfalls einen spiralförmigen Kanal bildet, in welchem das Wasser um die Achse des Ablaufrohres rotiert. Auch hier wird ein vergleichsweise geräuscharmer Einlauf angestrebt. Nachteilig ist auch hier die vergleichsweise aufwendige Herstellung des spiralförmigen Teiles mit vergleichsweise komplizierten Spritzgussteilen.

Die EP-A-470 642 zeigt in den Fig. 1 und 2 eine Einlaufgarnitur, bei welcher bei geöffnetem Ventil das Wasser nach dem Ventilsitz in eine erste ringförmige Kammer 24 und von dieser achsial in eine zweite ringförmige Kammer 26 fliesst. Diese zweite Kammer 26 ist unterseitig teilweise durch einen ringförmigen Ansatz eines Einlaufrohres 3 verschlossen, welches in das Ablaufrohr 4 eingesetzt ist. Der unterseitige teilweise Abschluss der zweiten Ringkammer wirkt ebenfalls geräuschmindernd, bedingt aber die Verwendung eines in das Ablaufrohr eingesetzten Rohres.

Der Erfindung liegt die Aufgabe zugrunde, eine Einlaufgarnitur der genannten Art zu schaffen, die einfacher und kostengünstiger herstellbar und dennoch vergleichsweise geräuscharm ist, sowie die Durchflussleistung nicht reduziert.

Die Aufgabe ist bei einer gattungsgemässen Einlaufgarnitur dadurch gelöst, dass ein scheibenförmiger in das Gehäuse eingelegter Einsatz eine untere Wandung des Ringkanals bildet, die mit Ausnahme einer Durchtrittsöffnung den Ringkanal unten abschliesst. Bei der erfindungsgemässen Einlaufgarnitur wird das Wasser bei geöffnetem Ventil wie bisher in einem Ringkanal durch tangentiales Einströmen in Rotation versetzt. Durch den scheibenförmigen Einsatz wird jedoch dieser Ringkanal nach unten teilweise verschlossen und bildet damit einen Strömungswiderstand. Dieser hat zur Folge, dass im genannten Ringkanal sich ein Rückstau bildet und beim Austritt in das Ablaufrohr ein Luftabschluss entsteht, der geräuschmindernd wirkt.

Nach einer Weiterbildung der Erfindung ist der Einsatz zwischen dem Ablaufrohr und dem Ventilgehäuse angeordnet. Dies ermöglicht eine konstruktiv einfache Befestigung des Einsatzes, wobei keine besonderen Befestigungsmittel erforderlich sind. Diese Anordnung des Einsatzes zwischen Ablaufrohr und Ventilgehäuse ist auch montagetechnisch vorteilhaft.

Der Einsatz kann sehr einfach und günstig im Spritzgussverfahren hergestellt werden. Nach innen ragende Vorsprünge am Ventilgehäuse können vermieden werden.

Nach einer Weiterbildung der Erfindung ist die Durchtrittsöffnung des Einsatzkanals mit einer in Umfangsrichtung des Einsatzes und schräg nach unten verlaufenden Leitfläche für das durchströmende Wasser versehen. Dadurch ist gewährleistet, dass der im Ringkanal durch die tangentiale Einströmung erzeugte Drall erhalten bleibt und das Wasser somit auch im Ablaufkanal an der Wandung entlang spiralförmig nach unten fliesst.

Weitere vorteilhafte Merkmale ergeben sich aus den abhängigen Patentansprüche, der nachfolgenden Beschreibung sowie der Zeichnung.

Ein Ausführungsbeispiel der Erfindung wird nachfolgend anhand der Zeichnung näher erläutert. Es zeigen:
- Fig. 1: eine teilweise geschnittene Ansicht einer erfindungsgemässen Einlaufgarnitur,
- Fig. 2: eine Ansicht eines Einsatzes,
- Fig. 3: ein Schnitt durch den Einsatz gemäss der Linie III-III der Fig. 4 und
- Fig. 4: eine Draufsicht auf den Einsatz.

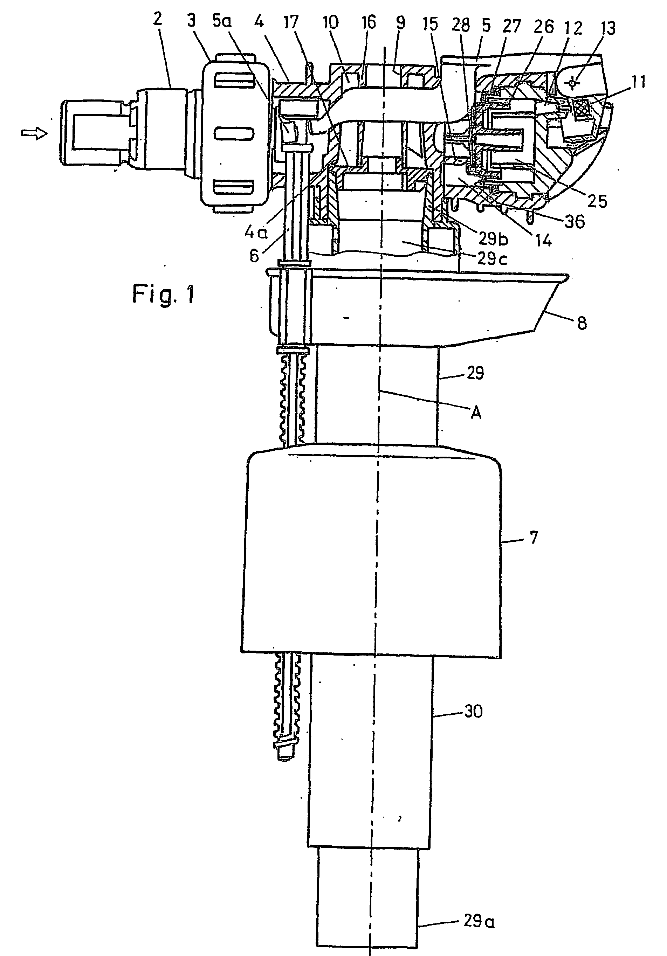

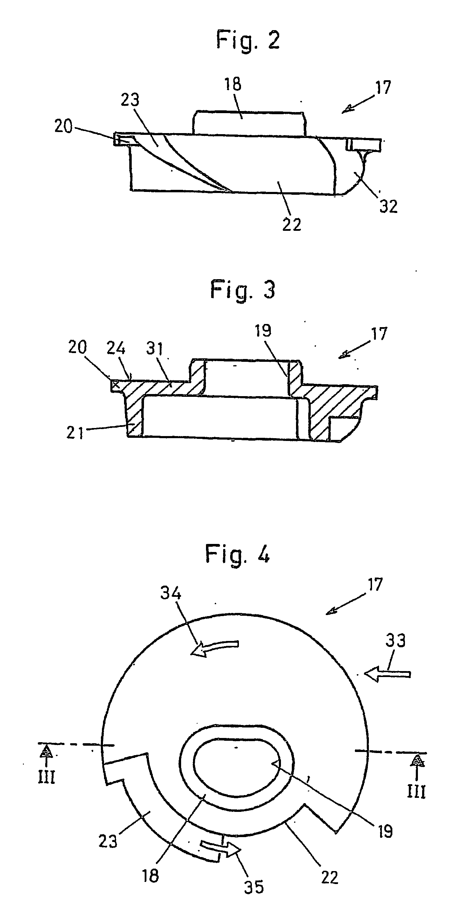

Die in Fig. 1 gezeigte Ablaufgarnitur 1 wird in einen hier nicht gezeigten Spülkasten eingesetzt und dient dazu, diesen nach einer Spülung wieder mit Spülwasser zu füllen. An einem Anschlussnippel 2 wird das Einlaufventil an eine hier nicht gezeigte Versorgungsleitung angeschlossen. Dieser Einlaufnippel 2 ist mit einer Mutter 3 an einem Gehäuse 4 befestigt. Das aus Kunststoff im Spritzgussverfahren hergestellte Gehäuse 4 weist einen Wasserführungskanal 14 auf, der vom Anschlussnippel 2 zu einem Membranventil 26 führt. Bei geöffnetem Membranventil 26 strömt das Wasser durch einen düsenförmigen Ansatz 15 tangential in einen Ringkanal 10 und durch eine Durchtrittsöffnung 22 (Fig. 2 und 4) in ein Ablaufrohr 29. Am unteren Ende 29a tritt das Wasser aus und strömt in den hier nicht gezeigten Spülkasten.

Das Membranventil 26 ist wie an sich bekannt ausgebildet. Es weist eine aus gummielastischem Material hergestellte Membran 27 auf, die den Wasserführungskanal 14 mit einer Kammer 25 verbindet. Die Kammer 25 besitzt einen Durchgang 12, der mit einem Verschlusskörper 11 eines Betätigungshebels 5 verschliessbar ist. Ist der Durchgang 12 in Fig. 1 gezeigt offen, so ist der Druck in der Kammer 25 wesentlich kleiner als derjenige im wasserführungskanal 14. Die Membran 27 wird infolge dieses Drukkunterschiedes vom Ventilsitz 28 abgehoben und das Wasser kann vom Wasserführungskanal 14 in den Ringkanal 10 einströmen.

Strömt das Wasser in den Spülkasten ein, so steigt in diesem das Wasserniveau und ein vertikal an einem Rohr 30 verschieblich geführter Schwimmer 7 wird angehoben. Der Schwimmer 7 ist mit einer Stange 6 verbunden und diese ist an ihrem oberen Ende an einem freien Ende 5a des Betätigungshebels 5 angelenkt. Beim Anheben des Schwimmers 7 wird der Betätigungshebel 5 um eine Achse 13 in Fig. 1 im Uhrzeigersinn verschwenkt und schliesst schliesslich den Durchgang 12. Bei verschlossenem Durchgang 12 baut sich in der Kammer 25 ein Druck auf, der schliesslich gleich ist wie der Druck im Wasserführungskanal 14. Da die Membranfläche auf der Seite der Kammer 25 grösser ist als auf der Seite des Wasserführungskanals 14, wird die Membran 27 am Ventilsitz 28 angepresst und damit das Ventil geschlossen. Bei einer Spülung sinkt der Schwimmer 7 und mit diesem ein Gewichtsbecher 8, wobei der Betätigungshebel 5 um die Achse 13 im Gegenuhrzeigersinn verschwenkt und der Durchgang 12 wieder geöffnet wird. Das Membranventil 26 wird hierbei wie oben erläutert geöffnet und das Wasser strömt tangential in den Ringkanal 10.

Wie bereits erläutert, ist es wesentlich, dass das einströmende Wasser im Ringkanal 10 rotiert und diese Rotation einen spiralförmigen Verlauf des Wassers im Ablaufrohr 29 bewirkt. Der Ringkanal 10 ist durch den scheibenförmigen Einsatz 17 mit Ausnahme einer Durchtrittsöffnung 22 verschlossen. Dieser Einsatz 17 ist in den Fig. 2 und 4 im Detail dargestellt. Dieser Einsatz 17 ist ein separat hergestelltes Spritzgussteil und gemäss Fig. 1 an einem radial vorspringenden Kragen 20 zwischen dem oberen Ende 29b und einer Schulter 4a des Ventilgehäuses 1 festgeklemmt. Wie die Fig. 2 bis 4 zeigen, ist an der Oberseite 24 des Einsatzes 17 ein unrunder und etwa nierenförmiger Ansatz 18 angeformt, der einen entsprechenden und etwas exzentrisch angeordneten Durchgang 19 bildet. Dieser Ansatz 18 ist in einen rohrförmigen Ansatz 16 des Gehäuses 4 eingesetzt und bildet mit diesem rohrförmigen Ansatz 16 einen Durchgang 9, der den Innenraum 29c des Ablaufrohres 29 mit der Umgebungsatmosphäre verbindet. Durch den nierenförmigen Ansatz 18 ist der Einsatz 17 so positioniert, dass die Durchtrittsöffnung 22 gegenüber der tangentialen Einströmrichtung (Pfeil 33) angeordnet ist. Der Rand 20 ist an einer sich horizontal erstreckenden Wandung 31 angeformt, die gemäss Fig. 4 zur Bildung der Durchtrittsöffnung 22 ringabschnittförmig ausgenommen ist. Die Durchtrittsöffnung 22 erstreckt sich wie ersichtlich nur über einen Bereich des Umfanges und zwar wie ersichtlich um weniger als 180° und um etwas mehr als 90°. Die Ausnehmung, welche die Durchtrittsöffnung 22 bildet, ist wie ersichtlich nach aussen offen.

Damit das in der Ringkammer 10 rotierende Wasser diese Bewegung beim Durchtritt der Öffnung 22 aufrechterhält, sind zwei Strömungsleitflächen 23 und 32 vorgesehen, die gemäss den Fig. 2 und 4 schräg nach unten verlaufen und einen Teilkreis bilden. In der Fig. 4 ist mit dem Pfeil 33 die tangentiale Einströmrichtung des Wassers in den Ringkanal 10 und mit dem Pfeil 34 die rotierende Bewegung des Wassers in diesem Kanal 10 angedeutet. Der Pfeil 35 deutet die Richtung an, in welcher das Wasser durch die Durchtrittsöffnung 22 in den Innenraum 29c des Ablaufrohres 29 durchtritt.

Die Durchtrittsöffnung 22 ist so dimensioniert, dass sich im Ringkanal 10 ein gewisser Rückstau bildet. Dieser hat zur Wirkung, dass bei geöffnetem Membranventil 26 sich im Durchtrittskanal 15 ein Druckabbau sowie ein Luftabschluss bildet. Dies dämmt die Geräuschbildung beim Einströmen des Wassers in den Ringkanal 10. Da die rotative bzw. spiralförmige Bewegung des Wasser im Ringkanal 10 erzeugt wird, besteht die Funktion des Einsatzes 17 nun lediglich in der Drosselung des Austritts und in der Bildung eines Rückstaus in der Ringkammer 10 am Ventilaustritt. Auf einen vergleichsweise aufwendigen mehrgängigen und spiralförmigen Kanal kann damit verzichtet werden.

## Patentansprüche

1. Einlaufgarnitur für einen Spülkasten, mit einem Ventilgehäuse (4), das einen Wasserführungskanal (14) aufweist, der von einem an eine Wasserversorgungsleitung anzuschliessenden Einlass (2) zu einem schwimmergesteuerten Membranventil (26) führt, das in einer Membran (27) einen Durchgang (36) für den Druckausgleich zwischen einem Raum (14) vor der Membran (27) und einem Raum (25) nach der Membran (27) aufweist und mit einem nach der Membran (27) angeordneten Ringkanal (10), in den das Wasser bei Gebrauch bei offenem Membranventil (26) tangential einströmt und in dem das Wasser um die Achse (A) eines Ablaufrohres (29) der Einlaufgarnitur rotiert, wobei der Strömungsquerschnitt nach diesem Ringkanal(10) vermindert ist, **dadurch gekennzeichnet, dass** ein scheibenförmiger in das Ventilgehause (4) eingelegter Einsatz (17) eine untere Wandung des Ringkanals (10) bildet, die mit Ausnahme einer Durchtrittsöffnung (22) den Ringkanal (10) unten abschliesst, derart, dass das im Ringkanal (10) bei gebrauch in Rotation versetzte Wasser durch die Durchtrittsöffnung (22) in das Ablaufrohr (29) strömt, wobei der Einsatz (17) einen Strömungswiderstand bildet, der zu einem geräuschmindernden Luftabschluss führt.

2. Einlaufgarnitur nach Anspruch 1, **dadurch gekennzeichnet, dass** der Einsatz (17) zwischen dem oberen Ende (29b) des Ablaufrohres (29) und dem Ventilgehäuse (4) angeordnet ist.

3. Einlaufgarnitur nach Anspruch 1 oder 2, **dadurch gekennzeichnet, dass** der Einsatz (17) konzentrisch auf das obere Ende (29b) des Ablaufrohres (29) aufgesetzt ist.

4. Einlaufgarnitur nach einem der Ansprüche 1 bis 3, **dadurch gekennzeichnet, dass** der Einsatz (17) einen wenigstens, teilweise umlaufenden und radial vorstehenden Kragen (20) aufweist und dass er an diesem Kragen (20) zwischen dem Ablaufrohr (29) und dem Ventilgehäuse (4) festgeklemmt und positioniert ist.

5. Einlaufgarnitur nach einem der Ansprüche 1 bis 4, **dadurch gekennzeichnet, dass** die Durchtrittsöffnung (22) parallel zur Einströmrichtung angeordnet ist.

6. Einlaufgarnitur nach Anspruch 5, **dadurch gekennzeichnet, dass** die Durchtrittsöffnung (22) etwa nierenförmig ausgebildet ist und sich um weniger als die Hälfte des Umfangs erstreckt.

7. Einlaufgarnitur nach einem der Ansprüche 1 bis 6, **dadurch gekennzeichnet, dass** die Durchtrittsöffnung (22) wenigstens eine sich in Umfangsrichtung erstreckende und schräg nach unten gerichtete Leitfläche (23, 32) aufweist.

8. Einlaufgarnitur nach Anspruch 7, **dadurch gekennzeichnet, dass** sich wenigstens eine Leitfläche (23, 32) um weniger als die Hälfte und vorzugsweise um etwa einen Viertel des Umfanges des Einsatzes (17) erstreckt.

9. Einlaufgarnitur nach einem der Ansprüche 1 bis 8, **dadurch gekennzeichnet, dass** die Durchtrittsöffnung (22) so bemessen ist, dass im Ringkanal (10) bei durchströmendem Wasser ein Rückstau gebildet wird.

10. Einlaufgarnitur nach einem der Ansprüche 1 bis 9, **dadurch gekennzeichnet, dass** der Einsatz (17) eine Entlüftungsöffnung (19) aufweist.

11. Einlaufgarnitur nach Anspruch 10, **dadurch gekennzeichnet, dass** die Entlüftungsöffnung (19) oberhalb einer oberen Fläche (24) einen rohrförmigen unrunden Ansatz (18) aufweist, der von unten in einen rohrförmigen Ansatz (16) des Ventilgehäuses (4) eingreift und dass die beiden genannten rohrförmigen Ansätze (18, 16) einen Verbindungskanal (9) zwischen dem Innenraum (29c) des Ablaufrohres (29) und der Umgebungsatmosphäre bilden.

## Claims

1. Inlet fitting for a WC flushing cistern with a valve housing (4) having a water-conducting channel (14) leading from an inlet (2), which is to be connected to a water supply pipe, to a float-controlled membrane valve (26) having in a membrane (27) a passage (36) through for pressure equalisation between a space (14) upstream of the membrane (27) and a space (25) downstream of the membrane (27) and with an annular channel (10), arranged downstream of the membrane, (27) into which the water flows tangentially in use when the membrane valve (26) is open and in which the water rotates around the axis (A) of an outflow pipe (29) of the inlet fitting, whereby the flow cross-section is reduced downstream of this annular space (10), **characterized in that** a disk-shaped insert (17) inserted into the valve housing (4) forms a lower wall of the annular channel (10) that closes the annular channel (10) at the bottom except for a passageway opening (22) in such a way that the water that is caused to rotate in the annular channel (10) in use flows through the passageway opening (22) into the outflow pipe (29) whereby the insert (17) forms a resistance to flow that leads to a noise-reducing exclusion of air.

2. Inlet fitting according to Claim 1, **characterized in that** the insert (17) is arranged between the upper end (29b) of the outflow pipe (29) and the valve housing (4).

3. Inlet fitting according to Claim 1 or 2, **characterized in that** the insert (17) is placed concentrically on the upper end (29b) of the outflow pipe (29).

4. Inlet fitting according to one of the Claims 1 to 3, **characterized in that** the insert (17) has a collar (20) running at least partly round it and projecting radially and **in that** it is firmly clamped and positioned at this collar (20) between the outflow pipe (29) and the valve housing (4).

5. Inlet fitting according to one of the Claims 1 to 4, **characterized in that** the passageway opening (22) is arranged parallel to the direction of inflow.

6. Inlet fitting according to Claim 5, **characterized in that** the passageway opening (22) is constructed approximately in the shape of a kidney and extends around less than half of the periphery.

7. Inlet fitting according to one of the Claims 1 to 6, **characterized in that** the passageway opening (22) has at least one guide surface (23, 32), extending in the direction of the periphery and aligned so as to slope downwards.

8. Inlet fitting according to Claim 7, **characterized in that** at least one guide surface (23, 32) extends around less than half of and preferably around approximately one quarter of the periphery of the insert (17).

9. Inlet fitting according to one of the Claims 1 to 8, **characterized in that** the passageway opening (22) is dimensioned in such a way that a backing-up occurs in the annular channel (10) when water flows through.

10. Inlet fitting according to one of the Claims 1 to 9, **characterized in that** the insert (17) has a vent opening (19).

11. Inlet fitting according to Claim 10, **characterized in that** the vent opening (19) has, above an upper surface (24), a tubular non-circular projection (18) that engages from below in a tubular projection (16) of the valve housing (4) and **in that** the said two tubular projections (18, 16) form a connecting channel (9) between the interior space (29c) of the outflow pipe (29) and the ambient atmosphere.

## Revendications

1. Garniture d'arrivée pour un réservoir de chasse, comportant un boîtier de soupape (16), qui comporte un canal d'amenée d'eau (14), qui relie une entrée (2) devant être raccordée à une canalisation d'alimentation en eau, à une soupape à membrane (26) commandée par un flotteur qui comporte, dans une membrane (27), un passage (36) pour la compensation de pression entre une chambre (14) située en avant de la membrane (27) et une chambre (25) située en arrière de la membrane (27) et comportant un canal de ceinture (10) disposé en arrière de la membrane (27) et dans lequel, en cas d'utilisation, l'eau pénètre tangentiellement lorsque la soupape à membrane (26) est ouverte et dans lequel l'eau tourne autour de l'axe (A) d'un tube d'évacuation (29) de la garniture d'arrivée, la section transversale d'écoulement étant réduite en aval de ce canal de ceinture (10), **caractérisé en ce qu'**un insert (17) en forme de disque inséré dans le boîtier de soupape (4) forme une paroi inférieure du canal de ceinture (10) qui, à l'exception d'une ouverture de passage (22), ferme le canal de ceinture (10) à sa partie inférieure, de telle sorte que l'eau qui est entraînée en rotation dans le canal de ceinture (10) lors d'une utilisation, traverse l'ouverture de passage (22) pour pénétrer dans le tube d'évacuation (29), l'insert (17) formant une résistance d'écoulement, qui conduit à une évacuation d'air réduisant les bruits.

2. Garniture d'arrivée selon la revendication 1, **caractérisée en ce que** l'insert (17) est disposé entre l'extrémité supérieure (29b) du tube d'évacuation (29) et le boîtier de soupape (4).

3. Garniture d'arrivée selon la revendication 1 ou 2, **caractérisée en ce que** l'insert (17) est disposé concentriquement sur l'extrémité supérieure (29b) du tube d'évacuation (29).

4. Garniture d'entrée selon l'une des revendications 1 à 3, **caractérisée en ce que** l'insert (17) possède un collet (20) au moins partiellement rotatif et faisant saillie radialement, et qu'il est bloqué fermement et positionné sur ce collet (20) entre le tube d'évacuation (29) et le boîtier de soupape (24).

5. Garniture d'arrivée selon l'une des revendications 1 à 4, **caractérisée en ce que** l'ouverture de passage (22) est disposée parallèlement à la direction d'écoulement d'entrée.

6. Garniture d'arrivée selon la revendication 5, **caractérisée en ce que** l'ouverture de passage (22) est agencée approximativement avec une forme de rein et s'étend sur moins de la moitié de la périphérie.

7. Garniture d'arrivée selon l'une des revendications 1 à 6, **caractérisée en ce que** l'ouverture de passage (22) comporte au moins une surface de guidage (23, 32) qui s'étend dans la direction circonférentielle et est dirigée obliquement vers le bas.

8. Garniture d'arrivée selon la revendication 7, **caractérisée en ce qu'**au moins une surface de guidage (23, 32) s'étend sur moins de la moitié et de préférence sur environ un quart de la périphérie de l'insert (17).

9. Garniture d'entrée selon l'une des revendications 1 à 8, **caractérisée en ce que** l'ouverture de passage (22) est dimensionnée de telle sorte qu'une retenue se forme dans le canal de ceinture (10) lorsque l'eau circule.

10. Garniture d'arrivée selon l'une des revendications 1 à 9, **caractérisée en ce que** l'insert (17) possède une ouverture de désaération (19).

11. Garniture d'entrée selon la revendication 10, **caractérisée en ce que** l'ouverture de désaération (19) comporte, au-dessus d'une surface supérieure (24), un appendice saillant de forme tubulaire non circulaire (18), qui s'engage à partir du bas dans un appendice saillante de forme tubulaire (16) du Loîtier de soupape (4) et que les deux appendices saillants indiqués de forme tubulaire (18, 16) forment un canal de liaison (9) entre l'espace intérieur (29a) du tube d'évacuation (29) et l'atmosphère environnante.
